# EUROPEAN PATENT APPLICATION

(11) **EP 4 485 876 A1**
(43) Date of publication of application: **01.01.2025**
(21) Application number: 23181643.0
(22) Date of filing: 27.06.2023
(51) Int. Cl.: H04L 41/0896, H04L 41/0895

(54) **NETWORK CLIENT DEVICE, DATA NETWORK, AND METHOD**

(71) Applicant: Rohde & Schwarz GmbH & Co. KG, 81671 München (DE)
(72) Inventor: AREND, Michael, 31840 Hessisch Oldendorf (DE)
(74) Representative: Kehl, Ascherl, Liebhoff & Ettmayr Patentanwälte Partnerschaft mbB

(57) **Abstract**

The present disclosure provides a network client device comprising a first communication unit configured to communicate network management data with other network client devices via a multicast data transmission, a second communication unit configured to communicate other data than the network management data, and a communication controller coupled to the first communication unit and the second communication unit, and configured to communicate a current bandwidth requirement of the network client device for communication via the second communication unit in the network management data to other network client devices via the first communication unit. Further, the present disclosure provides a data network, and a respective method.

## Description

### TECHNICAL FIELD

The disclosure relates to a network client device, a data network, and a respective method.

### BACKGROUND

Although applicable to any type of data network, the present disclosure will mainly be described in conjunction with data networks for measurement application devices.

Modern data networks may include management capabilities that allow flexibly configuring the operation of the data networks. Such data networks may also be called software-defined networks or SDNs.

However, SDNs require dedicated hardware that supports configuration via a respective SDN standard, like OpenFlow. Such hardware may be costly and in legacy data networks new hardware may be required.

Accordingly, there is a need for simplifying network management.

### SUMMARY

The above stated problem is solved by the features of the independent claims. It is understood, that independent claims of a claim category may be formed in analogy to the dependent claims of another claim category.

Accordingly, it is provided:

A network client device comprising a first communication unit configured to communicate network management data with other network client devices via a multicast data transmission, a second communication unit configured to communicate other data than the network management data, and a communication controller coupled to the first communication unit and the second communication unit, and configured to communicate a current bandwidth requirement of the network client device for communication via the second communication unit in the network management data to other network client devices via the first communication unit.

Further, it is provided:

A data network comprising at least two network client devices according to the present disclosure.

Further, it is provided:

A method for operating a network client device, the method comprising communicating network management data between the network client device and other network client devices via a multicast data transmission, communicating other data than the network management data via a separate data transmission, and communicating a current bandwidth requirement of the network client device for communication via the separate data transmission in the network management data to other network client devices via the multicast data transmission.

The present disclosure is based on the finding that providing software defined networks by enabling the infrastructure e.g., routers, and switches, to be flexibly configured requires replacing hardware in legacy networks and leads to an increased infrastructure cost.

The present disclosure, therefore, provides the network client device and the data network that allow flexibly managing bandwidth usage in the data network. The solution of the present disclosure allows using any kind of infrastructure, since the management of the bandwidth usage is performed on the client side without a central active bandwidth management unit.

Instead, the single network client devices according to the present disclosure will perform a kind of self-management or self-organized management in the data network to automatically control the bandwidth usage of the single network client devices.

To this end, the network client device comprises a first communication unit and a second communication unit. Each one of the communication units serves a different purpose.

The first communication unit serves for communicating network management data between the network client device and other network client devices. The first communication unit may, therefore, also be seen as a kind of management interface.

The first communication unit uses multicast data transmission. This means that a single data packet that is transmitted via the first communication unit may be received by multiple different network client devices. With the multicast data transmission, the network management data may efficiently be distributed between all the network client devices in a data network.

The second communication unit serves for communicating any other data or payload with communication partners. The other communication partners may comprise other network client devices and any other type of communication partner, especially communication partners that are not arranged in the same data network as the network client devices, for example, communication partners that are communicated to the network client device via the internet.

The second communication unit may use any type of data transmission e.g., unicast, multicast, or broadcast data transmission.

In embodiments, the first and the second communication units may both comprise any kind of wired and wireless communication interfaces, like for example a network communication interface, especially an Ethernet, wireless LAN or WIFI interface, a USB interface, a Bluetooth interface, an NFC interface, a visible or non-visible light-based interface, especially an infrared interface. The communication protocol used may comprise any adequate protocol for the first and the second communication units, for example a TCP/IP or UDP protocol.

The network client device further comprises a communication controller that is coupled to the first communication unit, and the second communication unit.

The communication controller communicates in the network management data a current bandwidth requirement of the network client device for communication via the second communication unit to other network client devices. This network management data is communicated via the first communication unit.

In embodiments, the single network client devices communicate the current bandwidth requirement cyclically i.e., in predefined intervals. The network client devices may e.g., communicate the current bandwidth requirement once every 0.1 seconds to 20 seconds, especially, every 10 seconds, every 5 seconds, every second, or every 0.5 seconds.

By communicating the required bandwidth that the single network client devices require for transmitting data via the second communication unit, the overall required bandwidth may be easily calculated or estimated in the data network. If certain bandwidth limits are exceeded, respective measures may be initiated in the data network.

Of course, the network client device may comprise other functional elements that provide specific functions to users of the network client device. Such further functional elements may comprise processors or processing elements with respective operating systems, applications, and the like.

An exemplary network client device may, for example, comprise a media storage device, a personal computer or PC, a mobile electronic device e.g., a smartphone or tablet PC, or a measurement application device.

In embodiments, the data network may comprise a data network that is mainly used for transmitting multimedia data, like videos and audio files.

In other embodiments, the data network may comprise a measurement application data network. In such a data network, the network client devices may comprise, but are not limited to, measurement application devices that communicate with each other to execute a specific measurement application.

A measurement application device according to the present disclosure may comprise any device that may be used in a measurement application to acquire an input signal or to generate an output signal, or to perform additional or supporting functions in a measurement application. A measurement application device may also comprise applications that may be executed on a computer device and that may communicate with other measurement application devices in order to perform a measurement task. A measurement application, also called measurement setup, may e.g., comprise at least one or multiple different measurement application devices for performing electric, magnetic, or electromagnetic measurements, especially on single devices under test. Such electric, magnetic, or electromagnetic measurements may be performed in a measurement laboratory or in a production facility in the respective production line. A measurement application or measurement setup may serve to qualify the single devices under test i.e., to determine the proper electrical operation of the respective devices under test.

Measurement application devices to this end may comprise at least one signal acquisition section for acquiring electric, magnetic, or electromagnetic signals to be measured from a device under test, or at least one signal generation section for generating electric, magnetic, or electromagnetic signals that may be provided to the device under test. Such a signal acquisition section may comprise, but is not limited to, a front-end for acquiring, filtering, and attenuating or amplifying electrical signals. The signal generation section may comprise, but is not limited to, respective signal generators, amplifiers, and filters.

Further, when acquiring signals, measurement application devices may comprise a signal processing section that may process the acquired signals. Processing may comprise converting the acquired signals from analog to digital signals, and any other type of digital signal processing, for example, converting signals from the time-domain into the frequency-domain.

The measurement application devices may also comprise a user interface to display the acquired signals to a user and allow a user to control the measurement application devices. Of course, a housing may be provided that comprises the elements of the measurement application device. It is understood, that further elements, like power supply circuitry, and communication interfaces may be provided.

A measurement application device may be a stand-alone device that may be operated without any further element in a measurement application to perform tests on a device under test. Of course, communication capabilities may also be provided for the measurement application device to interact with other measurement application devices.

A measurement application device may comprise, for example, a signal acquisition device e.g., an oscilloscope, especially a digital oscilloscope, a spectrum analyzer, or a vector network analyzer. Such a measurement application device may also comprise a signal generation device e.g., a signal generator, especially an arbitrary signal generator, also called arbitrary waveform generator, or a vector signal generator. Further possible measurement application devices comprise devices like calibration standards, or measurement probe tips.

Of course, at least some of the possible functions, like signal acquisition and signal generation, may be combined in a single measurement application device.

In embodiments, the measurement application device may comprise pure data acquisition devices that are capable of acquiring an input signal and of providing the acquired input signal as digital input signal to a respective data storage or application server. Such pure data acquisition devices not necessarily comprise a user interface or display. Instead, such pure data acquisition devices may be controlled remotely e.g., via a respective data interface, like a network interface or a USB interface. The same applies to pure signal generation devices that may generate an output signal without comprising any user interface or configuration input elements. Instead, such signal generation devices may be operated remotely via a data connection.

With the network client devices and the data network of the present disclosure, it is possible to easily monitor the bandwidth requirement in a data network.

Further embodiments of the present disclosure are subject of the further dependent claims and of the following description, referring to the drawings.

In the following, the dependent claims referring directly or indirectly to claim 1 are described in more detail. For the avoidance of doubt, the features of the dependent claims relating to the network client device can be combined in all variations with each other and the disclosure of the description is not limited to the claim dependencies as specified in the claim set. Further, the features of the other independent claims may be combined with any of the features of the dependent claims relating to the network client device in all variations, wherein respective method steps may implement the respective functions.

In an embodiment, which can be combined with all other embodiments of the network client device mentioned above or below, the communication controller may further be configured to receive the current bandwidth requirement of the other network client devices in the network management data.

Every single network client device in the data network may receive the current bandwidth requirement of other network client devices.

This allows each network client device to e.g., determin the overall required bandwidth in the network and assess a network status of the data network.

In embodiments, the network client device may e.g., display the overall required bandwidth to a user or inform a user it a predetermined bandwidth limit is exceeded.

In a further embodiment, which can be combined with all other embodiments of the network client device mentioned above or below, the communication controller may be further configured to receive in the network management data a group ID of a client group for the network client device and store the group ID. The communication controller may further be configured to receive in the network management data a maximum bandwidth for the respective client group and store the maximum bandwidth.

The group IDs may be assigned individually for each one of a plurality of different client groups. The term "client group" in this context refers to a group of network client devices that may be grouped by assigning them the same group ID.

Assigning single network client devices to a client group may be performed by a user when planning the data network, or by another entity that groups the single network client devices e.g., automatically, into different client groups based on their main functionality. This automatic grouping may e.g., be performed by a network manager in the data network, as will be explained in more detail below.

A client group may then actively be established by providing or communicating the respective group ID to all network client devices that are part of the respective client group.

The communication controllers of the respective network client devices will then store the received group ID and further operate as a member of the respective group. In addition to the group ID, the communication controller may also be provided with an indication of a maximum bandwidth for the respective client group. The compliance with this maximum bandwidth may be then be commonly monitored by the network client devices that form part of the respective client group, without the need to provide a configurable or SDN network infrastructure.

In another further embodiment, which can be combined with all other embodiments of the network client device mentioned above or below, the communication controller may further be configured to control a bandwidth for communication via the second communication unit based on at least one of, especially all of, the received current bandwidth requirement of the other network client devices, and the stored group ID, and the maximum bandwidth for the respective client group.

After adding the network client device to a client group by storing the respective group ID, the communication controller may control the data transmission via the second communication unit accordingly. The communication controller may especially control the bandwidth for communication via the second communication unit based on the group ID, the current bandwidth requirement of the other network client devices communicated by the other network client devices, and the maximum bandwidth for the respective client group.

In an exemplary embodiment, during operation of the data network, the single network client devices may be equally prioritized. In such an embodiment, all network client devices of a client group may transmit data at full bandwidth until the predefined maximum bandwidth for the client group is reached. For further data communication, all network client devices may then reduce their bandwidth for data transmission via the second communication unit, such that all network client devices may communicate data, although with reduced bandwidth.

The communication controller may in embodiments reduce its own bandwidth to the free bandwidth or available bandwidth for the respective client group. The free bandwidth may be calculated as the maximum bandwidth for the client group minus the sum of all received current bandwidth requirements.

In embodiments, the communication controller may control the bandwidth port-based or with IP filters.

In a further embodiment, which can be combined with all other embodiments of the network client device mentioned above or below, the communication controller may further be configured to receive data priority indications in the network management data from the other network client devices. The communication controller may further be configured to output a data priority indication for its own data transmission via the second communication unit to the other network client devices in the network management data, and the communication controller may further be configured to control a bandwidth for communication via the second communication unit based on the received data priority indications and the data priority indication for its own data transmission.

Instead of equally prioritizing the network client devices, as indicated above, in another possible embodiment, the single network client devices may prioritize their data transmission individually.

To this end, each one of the network client devices may indicate a data priority indication to the other network client devices in the network management data. In other embodiments, the data priority indication may be fixed for every network client device, and may e.g., be provided by the network manager to the single network client devices. In such embodiments, the priority indication not necessarily is transmitted between the single network client devices any more.

The network client devices may during operation compare the received data priority indications with their own data priority indication, and adapt the bandwidth or their data transmission via the second communication unit accordingly.

The data priority indication allows every network client device to individually adapt or indicate how important a data transmission is. Therefore, with the data priority indication, the flexibility of the decentralized network management of the present disclosure is increased.

The data priority indication may be provided in any adequate form. The data priority indication may e.g., be provided as one of a fixed number of values. Exemplary implementations of the data priority indication may comprise e.g., any value of 0 and 1 (one digit binary), or between 0 and 3 (two-digit binary), or between 0 and 7 (three-digit binary).

In embodiments, data transmissions with a predetermined priority e.g., the highest priority, may always be preferred. Such data transmission will, therefore, never be transmitted with a reduced bandwidth, even if the maximum bandwidth is exceeded. If multiple network client devices with the highest priority are present, they may e.g., operate on a "first come first serve" basis or may evenly distribute the available bandwidth.

Single network client devices in the data network may also be categorized as unlimited network client devices. Such network client devices may always transmit data with any bandwidth.

The management of the data priority indications may be performed based on a predefined rule-set. Such a rule-set may comprise rules that exemplarily may define the priority for a data transmission based on the content of the data transmission.

In an exemplary data network, a content generating device, like a computer of a user that generates video content, may be prioritized by the rule-set when sending such video content to a data storage in the data network, while other devices that consume content from the data storage may be limited regarding their bandwidth usage.

The management of the data priority indications may also be performed more flexibly e.g., based on workflows and/or supported by machine learning algorithms.

In another further embodiment, which can be combined with all other embodiments of the network client device mentioned above or below, the communication controller when controlling the bandwidth may further be configured to delay or cancel transmission of data or reduce the bandwidth for the transmission of the data via the second communication unit if an accumulated bandwidth requirement of the network client devices in the same client group that provided a higher or equal data priority indication as the network client device, and the required bandwidth for the own data transmission of the network client device is higher than the maximum bandwidth for the respective client group.

Based on the data priority indication, a network client device may assess whether it should reduce its bandwidth consumption or not.

The network client device may accumulate the bandwidth requirements for data transmissions of other network client devices that indicated a higher data priority indication, or a higher or equal data priority indication as the network client device.

If this accumulated bandwidth exceeds the predefined maximum bandwidth for the respective client group, the network client device may reduce the bandwidth for its own data transmission or cancel the data transmission.

The network client devices in such an embodiment form a kind of self-organizing or self-managing group of network client devices that automatically adapt their data transmission bandwidth to the current communication situation.

In a further embodiment, which can be combined with all other embodiments of the network client device mentioned above or below, the first communication unit and the second communication unit may comprise a single, or common, data interface.

For example, the data interface may be a single network interface of the respective network client device. Such a network interface may be e.g., the Ethernet interface of a computer.

With such a network interface, both, the first communication unit and the second communication unit, may communicate via the single Ethernet interface.

In embodiments, the first communication unit and the second communication unit may be provided e.g., as application, service, or daemon, that provide the respective functionality in the network client device. In embodiments, the first communication unit and the second communication unit may also comprise a combination of hardware and software, for example, a communication controller with a respective firmware. The first communication unit and the second communication unit may also be implemented as applications that are executed in a computing device.

Especially the software-based implementation allows easily implementing the functionality of the present disclosure in any electronic device with a communication interface.

In another further embodiment, which can be combined with all other embodiments of the data network mentioned above or below, the data network may further comprise a network manager configured to provide the network client devices via their second communication units with network management data comprising at least one of a group ID of client groups for the network client devices, and a maximum bandwidth for the respective client groups.

The network manager may be a dedicated device in the data network. In other embodiments, the network manager may be provided as application or program that may be executed on an electronic device, like a computer of a user.

The network manager may also be included in another device of the data network, like a data storage or any one of the network client devices. Such a data storage may comprise a predetermined transmission bandwidth, like 10 Gbit/s, 100 Gbit/s or 1000 Gbit/s. The single network client devices may access such a data storage.

The possibility to group the single network client devices into client groups allows the network manager to easily control or distribute the data transmission such that the available bandwidth is distributed adequately.

### BRIEF DESCRIPTION OF THE DRAWINGS

For a more complete understanding of the present disclosure and advantages thereof, reference is now made to the following description taken in conjunction with the accompanying drawings. The disclosure is explained in more detail below using exemplary embodiments which are specified in the schematic figures of the drawings, in which:
Figure 1 shows a block diagram of an embodiment of a network client device according to the present disclosure;
Figure 2 shows a block diagram of an embodiment of a data network according to the present disclosure;
Figure 3 shows a block diagram of another embodiment of a data network according to the present disclosure;
Figure 4 shows a flow diagram of an embodiment of a method according to the present disclosure;
Figure 5 shows a block diagram of an oscilloscope that may be used with an embodiment of a network client device, data network or method according to the present disclosure.
Figure 6 shows a block diagram of another oscilloscope that may be used with an embodiment of a network client device, data network or method according to the present disclosure.

In the figures like reference signs denote like elements unless stated otherwise.

### DETAILED DESCRIPTION OF THE DRAWINGS

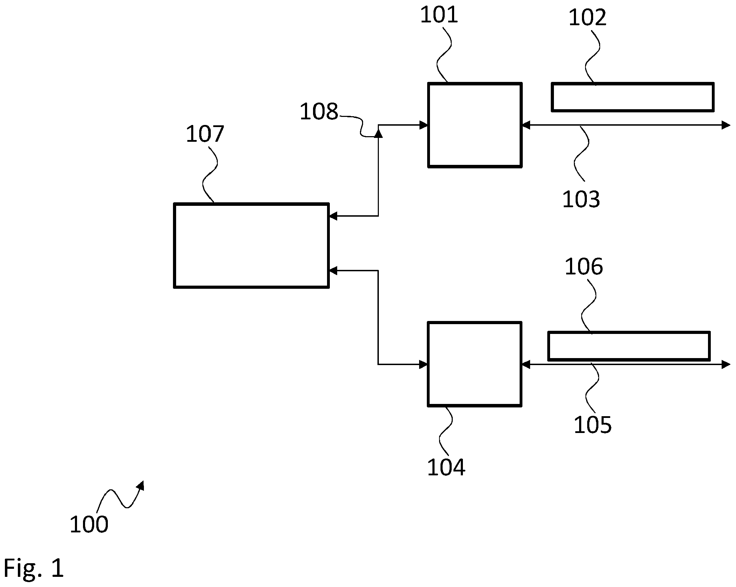

Figure 1 shows a block diagram of a network client device 100. The network client device 100 comprises a first communication unit 101, and a second communication unit 104 that are both coupled to a communication controller 107.

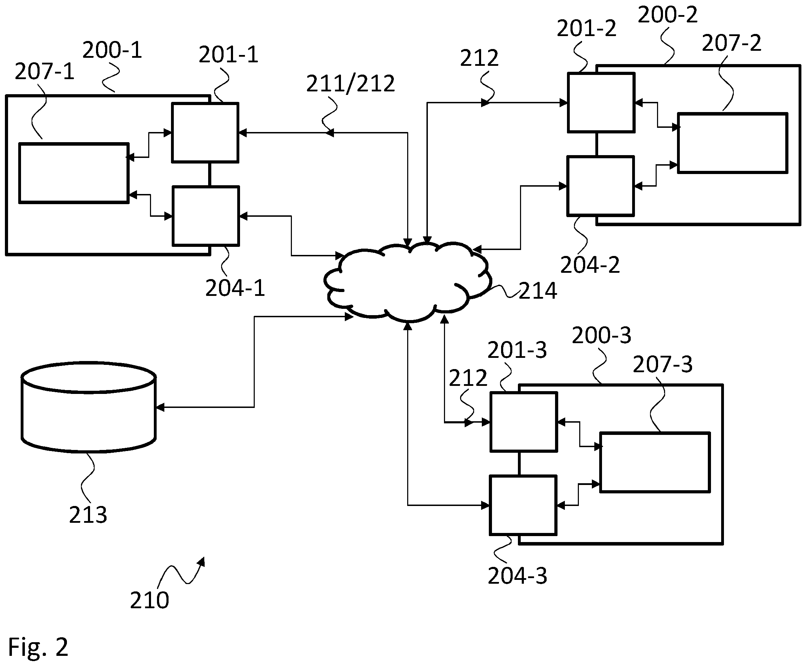

The first communication unit 101 communicates network management data 102 with other network client devices, as shown in figure 2, via a multicast data transmission 103. The second communication unit 104 communicates other data than the network management data with any possible communication partner.

The communication controller 107 communicates a current bandwidth requirement 108 of the network client device 100 for communication via the second communication unit 104 to other network client devices. This information is transmitted via the first communication unit 101 in the network management data 102.

Figure 2 shows a block diagram of a data network 210. The data network 210 exemplarily comprises three network client devices 200-1, 200-2, 200-3. Each one of the network client devices 200-1, 200-2, 200-3 is shown as an implementation of the network client device 100 of figure 1. Consequently, every one of the network client devices 200-1, 200-2, 200-3 comprises a first communication unit 201-1, 201-2, 201-3, and a second communication unit 204-1, 204-2, 204-3 that are both coupled to a communication controller 207-1, 207-2, 207-3. The explanations provided above regarding the network client device 100 apply mutatis mutandis to the network client devices 200-1, 200-2, 200-3.

It is understood, that any number of network client devices i.e., one, two, or more than three, may be provided in the data network 210. In addition, any combination of embodiments of the network client device as disclosed herein may be provided in the data network 210.

The data network 210 further comprises a network infrastructure 214 that may comprise any active or passive device that is required to establish the data communication in the data network 210. Further, a data storage 213 is provided in the data network 210 that may communicate with the network client devices 200-1, 200-2, 200-3 via the network infrastructure 214. The data storage 213 may store data provided by any one of the network client devices 200-1, 200-2, 200-3, or may provide stored data to the network client devices 200-1, 200-2, 200-3.

In the data network 210, the network client devices 200-1, 200-2, 200-3 exchange the information regarding the current bandwidth requirement 211. Although only the network client device 200-1 is exemplarily shown as receiving the current bandwidth requirement 211, all network client devices 200-1, 200-2, 200-3 may receive the current bandwidth requirement 211 from all other network client devices 200-1, 200-2, 200-3.

In the data network 210, therefore, every one of the network client devices 200-1, 200-2, 200-3 may determine the overall current bandwidth requirement for all network client devices 200-1, 200-2, 200-3. As explained above, single network client devices 200-1, 200-2, 200-3 may reduce their transmission bandwidth via the second communication unit 204-1, 204-2, 204-3 if required or if a maximum bandwidth is exceeded.

In addition to the current bandwidth requirement 211, the single network client devices 200-1, 200-2, 200-3 may also receive a group ID 212. In the shown example, all network client devices 200-1, 200-2, 200-3 receive the same group ID 212. In other embodiments, multiple group IDs may be generated and assigned to different network client devices. Such a client group may comprise any number from one to multiple network client devices.

In the data network 210, a maximum bandwidth usage may be assigned to each client group or group ID. During operation of the data network 210, each one of the network client devices 200-1, 200-2, 200-3 may then assess whether enough bandwidth for the client group it is assigned to, is still available and adapt its own data transmission accordingly.

Depending on e.g., a configuration or rule-set, the bandwidth may be evenly distributed among all network client devices 200-1, 200-2, 200-3 of a single client group.

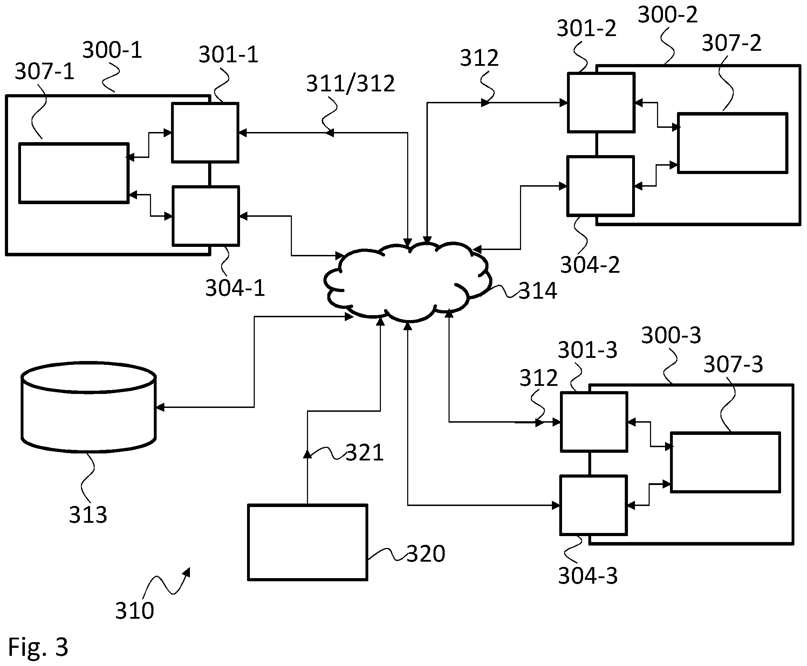

Figure 3 shows a block diagram of another data network 310. The data network 310 is based on the data network 210. Therefore, the data network 310 exemplarily comprises three network client devices 300-1, 300-2, 300-3. Each one of the network client devices 300-1, 300-2, 300-3 is shown as an implementation of the network client device 100 of figure 1. Consequently, every one of the network client devices 300-1, 300-2, 300-3 comprises a first communication unit 301-1, 301-2, 301-3, and a second communication unit 304-1, 304-2, 304-3 that are both coupled to a communication controller 307-1, 307-2, 307-3. The explanations provided above regarding the network client device 100 apply mutatis mutandis to the network client devices 300-1, 300-2, 300-3. In addition, the explanations provided above regarding the data network 210 apply mutatis mutandis to the data network 310. The data network 310 also comprises the data storage 313, which in embodiments may also be omitted.

In the data network 310, further, a network manager 320 is provided. The network manager 320 may assign and provide the group ID 312 to the network client devices 300-1, 300-2, 300-3. In addition, the network manager 320 may also assign priorities to the single network client devices 300-1, 300-2, 300-3 and provide respective priority indications 321 to the network client devices 300-1, 300-2, 300-3.

In each one of the network client devices 300-1, 300-2, 300-3, the respective communication controller 307-1, 307-2, 307-3 may then output the data priority indication 321 for its own data transmission via the second communication unit 304-1, 304-2, 304-3 to the other network client devices 300-1, 300-2, 300-3 in the network management data. Single network client devices 300-1, 300-2, 300-3 may change the priority indication 321 received from the network manager 320 e.g., based on the type of content that is to be transmitted. Alternatively, the priority indication 321 received from the network manager 320 may comprise a priority range that the single network client devices 300-1, 300-2, 300-3 may apply.

The single communication controllers 307-1, 307-2, 307-3 may then control a bandwidth for communication via the second communication unit 304-1, 304-2, 304-3 based on the received data priority indications 321 and the data priority indication 321 for its own data transmission.

In the above explained exemplary embodiments, the first communication units 101, 201-1, 201-2, 201-3, 301-1, 301-2, 301-3, and the second communication units 104, 204-1, 204-2, 204-3, 304-1, 304-2, 304-3 are shown as different units. In other embodiments, the first communication units 101, 201-1, 201-2, 201-3, 301-1, 301-2, 301-3, and the second communication units 104, 204-1, 204-2, 204-3, 304-1, 304-2, 304-3 may be embodied as single units. Further, the first communication units 101, 201-1, 201-2, 201-3, 301-1, 301-2, 301-3, and the second communication units 104, 204-1, 204-2, 204-3, 304-1, 304-2, 304-3 may use the same or different physical networks. In embodiments, the first communication unit 301-1, 301-2, 301-3, the second communication unit 304-1, 304-2, 304-3 and the communication controller 307-1, 307-2, 307-3 may be implemented in a single unit or device or application.

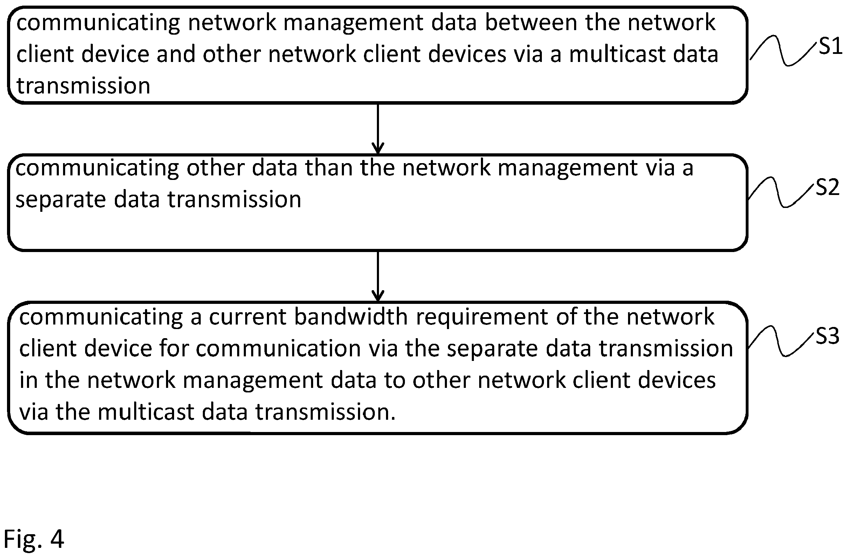

For sake of clarity in the following description of the method-based Fig. 4 the reference signs used above in the description of apparatus-based Figs. 1 - 3 and 5 - 6 will be maintained.

Figure 4 shows a flow diagram of a method for operating a network client device 100, 200-1, 200-2, 200-3, 300-1, 300-2, 300-3.

The method comprises communicating network management data 102 between the network client device 100, 200-1, 200-2, 200-3, 300-1, 300-2, 300-3 and other network client devices 100, 200-1, 200-2, 200-3, 300-1, 300-2, 300-3 via a multicast data transmission 103, communicating other data than the network management data via a separate data transmission 105, and communicating a current bandwidth requirement 108 of the network client device 100, 200-1, 200-2, 200-3, 300-1, 300-2, 300-3 for communication via the separate data transmission 105 in the network management data 102 to other network client devices 100, 200-1, 200-2, 200-3, 300-1, 300-2, 300-3 via the multicast data transmission 103.

In order to more flexibly manage the bandwidth usage of multiple network client devices 100, 200-1, 200-2, 200-3, 300-1, 300-2, 300-3, the method may further comprise receiving, in the network client device 100, 200-1, 200-2, 200-3, 300-1, 300-2, 300-3, the current bandwidth requirement 211, 311 of the other network client devices 100, 200-1, 200-2, 200-3, 300-1, 300-2, 300-3 in the network management data 102. This allows every one of the network client devices 100, 200-1, 200-2, 200-3, 300-1, 300-2, 300-3 to assess the bandwidth requirements in the data network 210, 310.

The method may further comprise receiving in the network management data 102 a group ID 212, 312 of a client group for the network client device 100, 200-1, 200-2, 200-3, 300-1, 300-2, 300-3, and storing the group ID 212, 312. In addition, in the network management data 102 a maximum bandwidth for the respective client group may be received and stored. This allows every one of the network client devices 100, 200-1, 200-2, 200-3, 300-1, 300-2, 300-3 to limit its own data transmission bandwidth if required.

In embodiments, the method may further comprise controlling a bandwidth for communication in the network client device 100, 200-1, 200-2, 200-3, 300-1, 300-2, 300-3 via the separate data transmission 105 based on at least one of the received current bandwidth requirement 211, 311 of the other network client devices 100, 200-1, 200-2, 200-3, 300-1, 300-2, 300-3, and the stored group ID 212, 312, and the maximum bandwidth for the respective client group.

For example, all network client devices 100, 200-1, 200-2, 200-3, 300-1, 300-2, 300-3 may evenly share the available bandwidth, or single network client devices 100, 200-1, 200-2, 200-3, 300-1, 300-2, 300-3 may be prioritized.

The method may also comprise receiving, in the network client device 100, 200-1, 200-2, 200-3, 300-1, 300-2, 300-3, data priority indications 321 in the network management data 102 from the other network client devices 100, 200-1, 200-2, 200-3, 300-1, 300-2, 300-3. In addition, from the network client device 100, 200-1, 200-2, 200-3, 300-1, 300-2, 300-3, a data priority indication 321 may be output for its own data transmission 105 via the separate data transmission 105 to the other network client devices 100, 200-1, 200-2, 200-3, 300-1, 300-2, 300-3 in the network management data 102. With this information at hand, in the network client device 100, 200-1, 200-2, 200-3, 300-1, 300-2, 300-3, a bandwidth for communication via the separate data transmission 105 may be controlled based on the received data priority indications 321 and the data priority indication 321 for its own data transmission 105.

Controlling the bandwidth may then comprise delaying or cancelling transmission of data or reducing the bandwidth for the transmission of the data via the separate data transmission 105 if an accumulated bandwidth requirement of the network client devices 100, 200-1, 200-2, 200-3, 300-1, 300-2, 300-3 in the same client group that provided a higher or equal data priority indication 321 as the network client device 100, 200-1, 200-2, 200-3, 300-1, 300-2, 300-3, and the required bandwidth for the own data transmission 105 of the network client device 100, 200-1, 200-2, 200-3, 300-1, 300-2, 300-3 is higher than the maximum bandwidth for the respective client group.

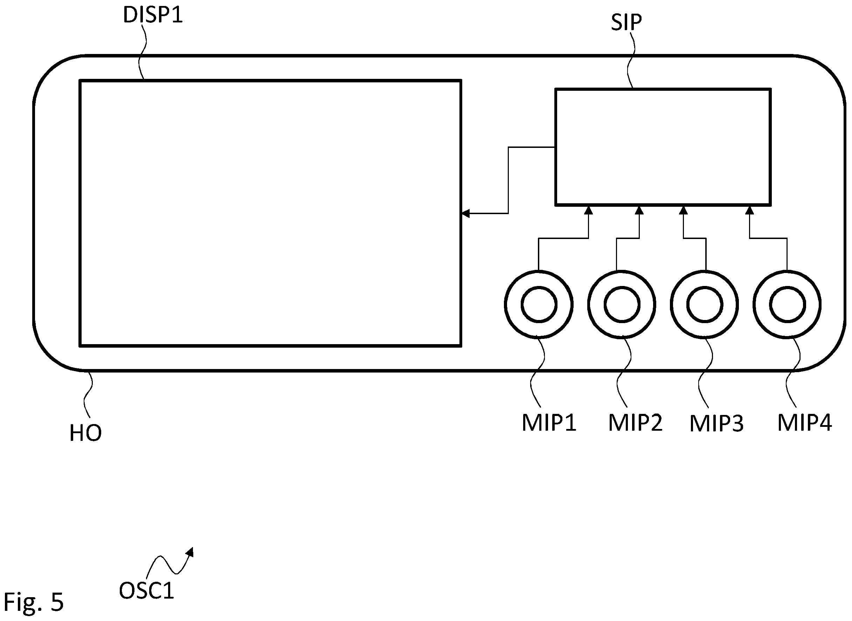

Figure 5 shows a block diagram of an oscilloscope OSC1 that may be used with an embodiment of a network client device, a data network or a method according to the present disclosure.

The oscilloscope OSC1 comprises a housing HO that accommodates four measurement inputs MIP1, MIP2, MIP3, MIP4 that are coupled to a signal processor SIP for processing any measured signals. The signal processor SIP is coupled to a display DISP1 for displaying the measured signals to a user.

Although not explicitly shown, it is understood, that the oscilloscope OSC1 may also comprise signal outputs that may also be coupled to the differential measurement probe. Such signal outputs may for example serve to output calibration signals. Such calibration signals allow calibrating the measurement setup prior to performing any measurement. The process of calibrating and correcting any measurement signals based on the calibration may also be called de-embedding and may comprise applying respective algorithms on the measured signals.

In the oscilloscope OSC1, the signal processor SIP may implement the functionality of any one of the embodiments of a network client device as disclosed herein. Although not shown, a communication interface, like an Ethernet interface, may be provided in the oscilloscope OSC1 coupled to the signal processor SIP for communication in a data network.

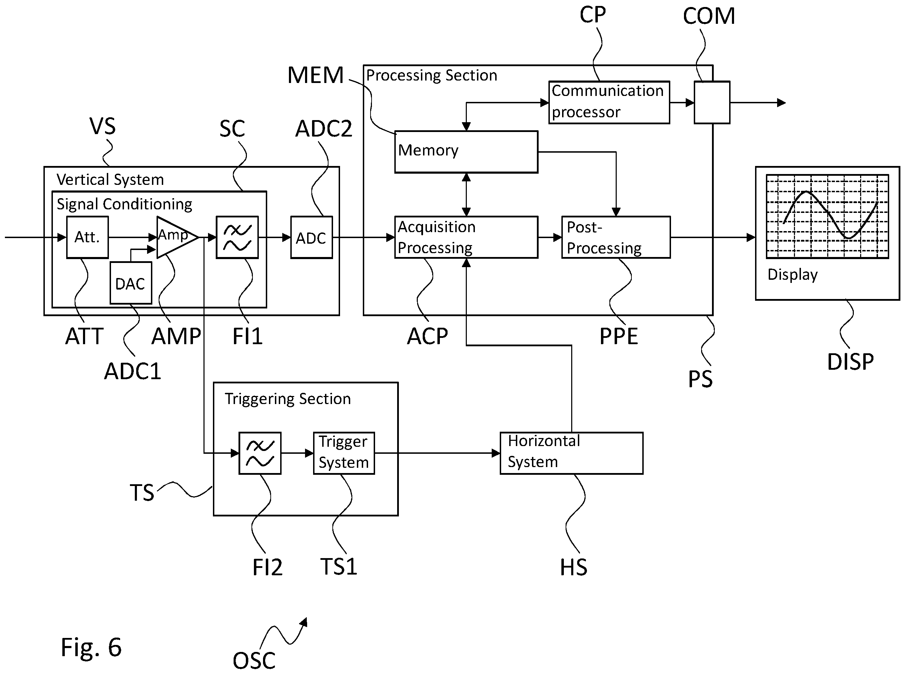

Figure 6 shows a block diagram of an oscilloscope OSC that may be an implementation of or comprise a network client device according to the present disclosure. The oscilloscope OSC is implemented as a digital oscilloscope. However, the present disclosure may also be implemented with any other type of oscilloscope.

The oscilloscope OSC exemplarily comprises five general sections, the vertical system VS, the triggering section TS, the horizontal system HS, the processing section PS and the display DISP. It is understood, that the partitioning into five general sections is a logical partitioning and does not limit the placement and implementation of any of the elements of the oscilloscope OSC in any way.

The vertical system VS mainly serves for offsetting, attenuating and amplifying a signal to be acquired. The signal may for example be modified to fit in the available space on the display DISP or to comprise a vertical size as configured by a user.

To this end, the vertical system VS comprises a signal conditioning section SC with an attenuator ATT and a digital-to-analog-converter DAC that are coupled to an amplifier AMP1. The amplifier AMP1 is coupled to a filter FI1, which in the shown example is provided as a low pass filter. The vertical system VS also comprises an analog-to-digital converter ADC1 that receives the output from the filter FI1 and converts the received analog signal into a digital signal.

The attenuator ATT and the amplifier AMP1 serve to scale the amplitude of the signal to be acquired to match the operation range of the analog-to-digital converter ADC1. The digital-to-analog-converter DAC1 serves to modify the DC component of the input signal to be acquired to match the operation range of the analog-to-digital converter ADC1. The filter FI1 serves to filter out unwanted high frequency components of the signal to be acquired.

The triggering section TS operates on the signal as provided by the amplifier AMP. The triggering section TS comprises a filter FI2, which in this embodiment is implemented as a low pass filter. The filter FI2 is coupled to a trigger system TS1.

The triggering section TS serves to capture predefined signal events and allows the horizontal system HS to e.g., display a stable view of a repeating waveform, or to simply display waveform sections that comprise the respective signal event. It is understood, that the predefined signal event may be configured by a user via a user input of the oscilloscope OSC.

Possible predefined signal events may for example include, but are not limited to, when the signal crosses a predefined trigger threshold in a predefined direction i.e., with a rising or falling slope. Such a trigger condition is also called an edge trigger. Another trigger condition is called "glitch triggering" and triggers, when a pulse occurs in the signal to be acquired that has a width that is greater than or less than a predefined amount of time.

In order to allow an exact matching of the trigger event and the waveform that is shown on the display DISP, a common time base may be provided for the analog-to-digital converter ADC1 and the trigger system TS1.

It is understood, that although not explicitly shown, the trigger system TS1 may comprise at least one of configurable voltage comparators for setting the trigger threshold voltage, fixed voltage sources for setting the required slope, respective logic gates like e.g., a XOR gate, and FlipFlops to generate the triggering signal.

The triggering section TS is exemplarily provided as an analog trigger section. It is understood, that the oscilloscope OSC may also be provided with a digital triggering section. Such a digital triggering section will not operate on the analog signal as provided by the amplifier AMP but will operate on the digital signal as provided by the analog-to-digital converter ADC1.

A digital triggering section may comprise a processing element, like a processor, a DSP, a CPLD, an ASIC or an FPGA to implement digital algorithms that detect a valid trigger event.

The horizontal system HS is coupled to the output of the trigger system TS1 and mainly serves to position and scale the signal to be acquired horizontally on the display DISP.

The oscilloscope OSC further comprises a processing section PS that implements digital signal processing and data storage for the oscilloscope OSC. The processing section PS comprises an acquisition processing element ACP that is couple to the output of the analog-to-digital converter ADC1 and the output of the horizontal system HS as well as to a memory MEM and a post processing element PPE.

The acquisition processing element ACP manages the acquisition of digital data from the analog-to-digital converter ADC1 and the storage of the data in the memory MEM. The acquisition processing element ACP may for example comprise a processing element with a digital interface to the analog-to-digital converter ADC2 and a digital interface to the memory MEM. The processing element may for example comprise a microcontroller, a DSP, a CPLD, an ASIC or an FPGA with respective interfaces. In a microcontroller or DSP, the functionality of the acquisition processing element ACP may be implemented as computer readable instructions that are executed by a CPU. In a CPLD or FPGA the functionality of the acquisition processing element ACP may be configured in to the CPLD or FPGA opposed to software being executed by a processor.

The processing section PS further comprises a communication processor CP and a communication interface COM.

The communication processor CP may be a device that manages data transfer to and from the oscilloscope OSC. The communication interface COM for any adequate communication standard like for example, Ethernet, WIFI, Bluetooth, NFC, an infra-red communication standard, and a visible-light communication standard.

The communication processor CP is coupled to the memory MEM and may use the memory MEM to store and retrieve data.

Of course, the communication processor CP may also be coupled to any other element of the oscilloscope OSC to retrieve device data or to provide device data that is received from the management server.

In the oscilloscope OSC, the communication processor CP may implement the functionality of any one of the embodiments of a network client device as disclosed herein. Of course, at least part of the functionality may also be implemented in any other processing element of the processing section PS.

The post processing element PPE may be controlled by the acquisition processing element ACP and may access the memory MEM to retrieve data that is to be displayed on the display DISP. The post processing element PPE may condition the data stored in the memory MEM such that the display DISP may show the data e.g., as waveform to a user. The post processing element PPE may also realize analysis functions like cursors, waveform measurements, histograms, or math functions.

The display DISP controls all aspects of signal representation to a user, although not explicitly shown, may comprise any component that is required to receive data to be displayed and control a display device to display the data as required.

It is understood, that even if it is not shown, the oscilloscope OSC may also comprise a user interface for a user to interact with the oscilloscope OSC. Such a user interface may comprise dedicated input elements like for example knobs and switches. At least in part the user interface may also be provided as a touch sensitive display device.

It is understood, that all elements of the oscilloscope OSC that perform digital data processing may be provided as dedicated elements. As alternative, at least some of the above-described functions may be implemented in a single hardware element, like for example a microcontroller, DSP, CPLD or FPGA. Generally, the above-describe logical functions may be implemented in any adequate hardware element of the oscilloscope OSC and not necessarily need to be partitioned into the different sections explained above.

The processes, methods, or algorithms disclosed herein can be deliverable to/implemented by a processing device, controller, or computer, which can include any existing programmable electronic control unit or dedicated electronic control unit. Similarly, the processes, methods, or algorithms can be stored as data and instructions executable by a controller or computer in many forms including, but not limited to, information permanently stored on non-writable storage media such as ROM devices and information alterably stored on writeable storage media such as floppy disks, magnetic tapes, CDs, RAM devices, and other magnetic and optical media. The processes, methods, or algorithms can also be implemented in a software executable object. Alternatively, the processes, methods, or algorithms can be embodied in whole or in part using suitable hardware components, such as Application Specific Integrated Circuits (ASICs), Field-Programmable Gate Arrays (FPGAs), state machines, controllers or other hardware components or devices, or a combination of hardware, software and firmware components.

While exemplary embodiments are described above, it is not intended that these embodiments describe all possible forms encompassed by the claims. The words used in the specification are words of description rather than limitation, and it is understood that various changes can be made without departing from the spirit and scope of the disclosure. As previously described, the features of various embodiments can be combined to form further embodiments of the invention that may not be explicitly described or illustrated. While various embodiments could have been described as providing advantages or being preferred over other embodiments or prior art implementations with respect to one or more desired characteristics, those of ordinary skill in the art recognize that one or more features or characteristics can be compromised to achieve desired overall system attributes, which depend on the specific application and implementation. These attributes can include, but are not limited to cost, strength, durability, life cycle cost, marketability, appearance, packaging, size, serviceability, weight, manufacturability, ease of assembly, etc. As such, to the extent any embodiments are described as less desirable than other embodiments or prior art implementations with respect to one or more characteristics, these embodiments are not outside the scope of the disclosure and can be desirable for particular applications.

With regard to the processes, systems, methods, heuristics, etc. described herein, it should be understood that, although the steps of such processes, etc. have been described as occurring according to a certain ordered sequence, such processes could be practiced with the described steps performed in an order other than the order described herein. It further should be understood that certain steps could be performed simultaneously, that other steps could be added, or that certain steps described herein could be omitted. In other words, the descriptions of processes herein are provided for the purpose of illustrating certain embodiments, and should in no way be construed so as to limit the claims.

Accordingly, it is to be understood that the above description is intended to be illustrative and not restrictive. Many embodiments and applications other than the examples provided would be apparent upon reading the above description. The scope should be determined, not with reference to the above description, but should instead be determined with reference to the appended claims, along with the full scope of equivalents to which such claims are entitled. It is anticipated and intended that future developments will occur in the technologies discussed herein, and that the disclosed systems and methods will be incorporated into such future embodiments. In sum, it should be understood that the application is capable of modification and variation.

All terms used in the claims are intended to be given their broadest reasonable constructions and their ordinary meanings as understood by those knowledgeable in the technologies described herein unless an explicit indication to the contrary in made herein. In particular, use of the singular articles such as "a," "the," "said," etc. should be read to recite one or more of the indicated elements unless a claim recites an explicit limitation to the contrary.

The abstract of the disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separately claimed subject matter.

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

### LIST OF REFERENCE SIGNS

- 100, 200-1, 200-2, 200-3: network client device
- 300-1, 300-2, 300-3: network client device
- 101, 201-1, 201-2, 201-3: first communication unit
- 301-1, 301-2, 301-3: first communication unit
- 102: network management data
- 103: multicast data transmission
- 104, 204-1, 204-2, 204-3: second communication unit
- 304-1, 304-2, 304-3: second communication unit
- 105: data transmission
- 106: payload data
- 107, 207-1, 207-2, 207-3: communication controller
- 307-1, 307-2, 307-3: communication controller
- 108: current bandwidth requirement

- 210, 310: data network
- 211, 311: received current bandwidth requirement
- 212, 312: group ID
- 213, 313: data storage
- 214, 314: network infrastructure

- 320: network manager
- 321: priority indication

- OSC1: oscilloscope
- HO: housing
- MIP1, MIP2, MIP3, MIP4: measurement input
- SIP: signal processing
- DISP1: display

- S1, S2, S3: method steps

- OSC: oscilloscope

- VS: vertical system
- SC: signal conditioning
- ATT: attenuator
- DAC1: analog-to-digital converter
- AMP1: amplifier
- FI1: filter
- ADC1: analog-to-digital converter

- TS: triggering section
- AMP2: amplifier
- FI2: filter
- TS1: trigger system

- HS: horizontal system

- PS: processing section
- ACP: acquisition processing element
- MEM: memory
- PPE: post processing element

- DISP: display

## Claims

1. Network client device (100, 200-1, 200-2, 200-3, 300-1, 300-2, 300-3) comprising:
a first communication unit (101, 201-1, 201-2, 201-3, 301-1, 301-2, 301-3) configured to communicate network management data (102) with other network client devices (100, 200-1, 200-2, 200-3, 300-1, 300-2, 300-3) via a multicast data transmission (103);
a second communication unit (104, 204-1, 204-2, 204-3, 304-1, 304-2, 304-3) configured to communicate other data than the network management data; and
a communication controller (107, 207-1, 207-2, 207-3, 307-1, 307-2, 307-3) coupled to the first communication unit (101, 201-1, 201-2, 201-3, 301-1, 301-2, 301-3) and the second communication unit (104, 204-1, 204-2, 204-3, 304-1, 304-2, 304-3), and configured to communicate a current bandwidth requirement (108) of the network client device (100, 200-1, 200-2, 200-3, 300-1, 300-2, 300-3) for communication via the second communication unit (104, 204-1, 204-2, 204-3, 304-1, 304-2, 304-3) in the network management data (102) to other network client devices (100, 200-1, 200-2, 200-3, 300-1, 300-2, 300-3) via the first communication unit (101, 201-1, 201-2, 201-3, 301-1, 301-2, 301-3).

2. Network client device (100, 200-1, 200-2, 200-3, 300-1, 300-2, 300-3) according to claim 1, wherein the communication controller (107, 207-1, 207-2, 207-3, 307-1, 307-2, 307-3) is further configured to receive the current bandwidth requirement (211, 311) of the other network client devices (100, 200-1, 200-2, 200-3, 300-1, 300-2, 300-3) in the network management data (102).

3. Network client device (100, 200-1, 200-2, 200-3, 300-1, 300-2, 300-3) according to any one of the preceding claims, wherein the communication controller (107, 207-1, 207-2, 207-3, 307-1, 307-2, 307-3) is further configured to receive in the network management data (102) a group ID (212, 312) of a client group for the network client device (100, 200-1, 200-2, 200-3, 300-1, 300-2, 300-3) and store the group ID (212, 312); and
wherein the communication controller (107, 207-1, 207-2, 207-3, 307-1, 307-2, 307-3) is further configured to receive in the network management data (102) a maximum bandwidth for the respective client group and store the maximum bandwidth.

4. Network client device (100, 200-1, 200-2, 200-3, 300-1, 300-2, 300-3) according to claims 2 and 3, wherein the communication controller (107, 207-1, 207-2, 207-3, 307-1, 307-2, 307-3) is further configured to control a bandwidth for communication via the second communication unit (104, 204-1, 204-2, 204-3, 304-1, 304-2, 304-3) based on at least one of the received current bandwidth requirement (211, 311) of the other network client devices (100, 200-1, 200-2, 200-3, 300-1, 300-2, 300-3), and the stored group ID (212, 312), and the maximum bandwidth for the respective client group.

5. Network client device (100, 200-1, 200-2, 200-3, 300-1, 300-2, 300-3) according to any one of the preceding claims, wherein the communication controller (107, 207-1, 207-2, 207-3, 307-1, 307-2, 307-3) is further configured to receive data priority indications (321) in the network management data (102) from the other network client devices (100, 200-1, 200-2, 200-3, 300-1, 300-2, 300-3);
wherein the communication controller (107, 207-1, 207-2, 207-3, 307-1, 307-2, 307-3) is further configured to output a data priority indication (321) for its own data transmission (105) via the second communication unit (104, 204-1, 204-2, 204-3, 304-1, 304-2, 304-3) to the other network client devices (100, 200-1, 200-2, 200-3, 300-1, 300-2, 300-3) in the network management data (102); and
wherein the communication controller (107, 207-1, 207-2, 207-3, 307-1, 307-2, 307-3) is further configured to control a bandwidth for communication via the second communication unit (104, 204-1, 204-2, 204-3, 304-1, 304-2, 304-3) based on the received data priority indications (321) and the data priority indication (321) for its own data transmission (105).

6. Network client device (100, 200-1, 200-2, 200-3, 300-1, 300-2, 300-3) according to claim 5 and claim 4, wherein the communication controller (107, 207-1, 207-2, 207-3, 307-1, 307-2, 307-3) when controlling the bandwidth is further configured to delay or cancel transmission of data or reduce the bandwidth for the transmission of the data via the second communication unit (104, 204-1, 204-2, 204-3, 304-1, 304-2, 304-3) if:
an accumulated bandwidth requirement of the network client devices (100, 200-1, 200-2, 200-3, 300-1, 300-2, 300-3) in the same client group that provided a higher or equal data priority indication (321) as the network client device (100, 200-1, 200-2, 200-3, 300-1, 300-2, 300-3), and the required bandwidth for the own data transmission (105) of the network client device (100, 200-1, 200-2, 200-3, 300-1, 300-2, 300-3) is higher than the maximum bandwidth for the respective client group.

7. Network client device (100, 200-1, 200-2, 200-3, 300-1, 300-2, 300-3) according to any one of the preceding claims, wherein the first communication unit (101, 201-1, 201-2, 201-3, 301-1, 301-2, 301-3) and the second communication unit (104, 204-1, 204-2, 204-3, 304-1, 304-2, 304-3) comprise a single data interface.

8. Data network comprising:
at least two network client devices (100, 200-1, 200-2, 200-3, 300-1, 300-2, 300-3) according to any one of the preceding claims.

9. Data network according to claim 8, further comprising a network manager (320) configured to provide the network client devices (100, 200-1, 200-2, 200-3, 300-1, 300-2, 300-3) via their second communication units (104, 204-1, 204-2, 204-3, 304-1, 304-2, 304-3) with network management data (102) comprising at least one of a group ID (212, 312) of client groups for the network client devices (100, 200-1, 200-2, 200-3, 300-1, 300-2, 300-3), and a maximum bandwidth for the respective client groups.

10. Method for operating a network client device (100, 200-1, 200-2, 200-3, 300-1, 300-2, 300-3), the method comprising:
communicating network management data (102) between the network client device (100, 200-1, 200-2, 200-3, 300-1, 300-2, 300-3) and other network client devices (100, 200-1, 200-2, 200-3, 300-1, 300-2, 300-3) via a multicast data transmission (103);
communicating other data than the network management data via a separate data transmission (105); and
communicating a current bandwidth requirement (108) of the network client device (100, 200-1, 200-2, 200-3, 300-1, 300-2, 300-3) for communication via the separate data transmission (105) in the network management data (102) to other network client devices (100, 200-1, 200-2, 200-3, 300-1, 300-2, 300-3) via the multicast data transmission (103).

11. Method according to claim 10, further comprising receiving, in the network client device (100, 200-1, 200-2, 200-3, 300-1, 300-2, 300-3), the current bandwidth requirement (211, 311) of the other network client devices (100, 200-1, 200-2, 200-3, 300-1, 300-2, 300-3) in the network management data (102).

12. Method according to any one of the preceding method-based claims, further comprising receiving in the network management data (102) a group ID (212, 312) of a client group for the network client device (100, 200-1, 200-2, 200-3, 300-1, 300-2, 300-3), and storing the group ID (212, 312); and
receiving in the network management data (102) a maximum bandwidth for the respective client group, and storing the maximum bandwidth.

13. Method according to claims 11 and 12, further comprising controlling a bandwidth for communication in the network client device (100, 200-1, 200-2, 200-3, 300-1, 300-2, 300-3) via the separate data transmission (105) based on at least one of the received current bandwidth requirement (211, 311) of the other network client devices (100, 200-1, 200-2, 200-3, 300-1, 300-2, 300-3), and the stored group ID (212, 312), and the maximum bandwidth for the respective client group.

14. Method according to any one of the preceding method-based claims, further comprising receiving, in the network client device (100, 200-1, 200-2, 200-3, 300-1, 300-2, 300-3), data priority indications (321) in the network management data (102) from the other network client devices (100, 200-1, 200-2, 200-3, 300-1, 300-2, 300-3);
outputting, from the network client device (100, 200-1, 200-2, 200-3, 300-1, 300-2, 300-3), a data priority indication (321) for its own data transmission (105) via the separate data transmission (105) to the other network client devices (100, 200-1, 200-2, 200-3, 300-1, 300-2, 300-3) in the network management data (102); and
controlling, in the network client device (100, 200-1, 200-2, 200-3, 300-1, 300-2, 300-3), a bandwidth for communication via the separate data transmission (105) based on the received data priority indications (321) and the data priority indication (321) for its own data transmission (105).

15. Method according to claim 14 and claim 13, wherein controlling the bandwidth further comprises delaying or cancelling transmission of data or reducing the bandwidth for the transmission of the data via the separate data transmission (105) if:
an accumulated bandwidth requirement of the network client devices (100, 200-1, 200-2, 200-3, 300-1, 300-2, 300-3) in the same client group that provided a higher or equal data priority indication (321) as the network client device (100, 200-1, 200-2, 200-3, 300-1, 300-2, 300-3), and the required bandwidth for the own data transmission (105) of the network client device (100, 200-1, 200-2, 200-3, 300-1, 300-2, 300-3) is higher than the maximum bandwidth for the respective client group.
